# EUROPEAN PATENT APPLICATION

(11) **EP 2 683 024 A1**
(43) Date of publication of application: **08.01.2014**
(21) Application number: 13175321.2
(22) Date of filing: 05.07.2013
(51) Int. Cl.: H01Q 1/02, H01Q 1/24, H01Q 21/00, H04B 1/036, H04B 1/18

(54) **Antenna apparatus**

(30) Priority: 06.07.2012 JP 2012152495
(71) Applicant: Kabushiki Kaisha Toshiba, Tokyo 105-8001 (JP)
(72) Inventor: Kumamoto, Tsuyoshi, Minato-ku, Tokyo 105-8001 (JP); Shinonaga, Mitsuyoshi, Minato-ku, Tokyo 105-8001 (JP); Kayano, Hiroyuki, Minato-ku, Tokyo 105-8001 (JP)
(74) Representative: Granleese, Rhian Jane

(57) **Abstract**

According to one embodiment, an antenna apparatus includes an antenna (T1), a duplexer (1), a reception circuit (61), a phase controller (71), a combining unit (8), a thermally insulating container (9) and a cooling unit (10 and 11). A reception circuit (61) configured to separate a frequency of a signal received by the antenna into a plurality of reception pathways via BPFs (Band Pass Filters) (6111 to 611 m) corresponding to the number of transmittable frequencies, extract the reception signals, amplify with low noise the extracted reception signals by an LNA (Low Noise Filter) (6131 to 613m) for the separated reception pathways, select a reception pathway corresponding to the transmission frequency from the separated reception pathways, and output the reception signal amplified with low noise to the selected reception pathway.

## Description

### FIELD

Embodiments described herein relate generally to an antenna apparatus used as a reception antenna for a radar, communication system, microwave radiometer, and radio reception system.

### BACKGROUND

In a system having a signal reception function, such as a radar or communication system, the sensitivity of a receiver is increased by reducing the system noise temperature, as a performance improvement measure. The system noise temperature is generally generated by a transmission loss generated in a line extending from an antenna to an LNA (Low Noise Amplifier), and internal noise generated in the LNA. In this system, to reduce the transmission loss and internal noise, the line extending from the antenna to the LNA, an electric circuit such as a reception filter, and the LNA are contained in a thermally insulating container such as a vacuum container, and cooled to a superconducting state by a cooling means such as a refrigerator. By cooling the line and electric circuit to the superconducting state, the transmission loss generated in the line extending from the antenna to the LNA approaches almost zero. Cooling the LNA to the superconducting state also reduces the internal noise of the LNA. Since the transmission loss from the antenna to the LNA approaches zero and the internal noise of the LNA is reduced, the sensitivity of the receiver increases.

There is proposed an antenna apparatus which increases the sensitivity of the reception function by the above-described arrangement. In this antenna apparatus, a BPF (Band Pass Filter) which passes only a frequency band to be used is arranged on the input side of the LNA in order to remove an unwanted wave such as an interfering signal. For example, when the antenna apparatus is used in a radar apparatus which has a plurality of transmittable frequencies (center frequencies) and requires a wide frequency band (radar band) complying with the plurality of transmittable frequencies, it commonly uses the reception circuit at all the center frequencies. An instantaneous band at the center frequency of a filter used in the operation of the antenna apparatus is narrow. For this reason, the antenna apparatus forms a BPF having a wide band covering the entire radar band.

However, in the antenna apparatus which forms the wide-band BPF, when an unwanted wave such as an interfering signal is input at some frequency in the radar band, the BPF cannot suppress the unwanted wave. The antenna apparatus therefore has problems such as saturation of the LNA, and superposition of a distortion component generated by intermodulation on a reception signal.

### BRIEF DESCRIPTION OF THE DRAWINGS

FIG. 1 is a block diagram showing the arrangement of an antenna apparatus according to an embodiment;
FIG. 2 is a sectional view showing a vacuum container in the antenna apparatus shown in FIG. 1;
FIG. 3 is a block diagram showing the first modification of the arrangement of the antenna apparatus according to the embodiment;
FIG. 4 is a block diagram showing the second modification of the arrangement of the antenna apparatus according to the embodiment;
FIG. 5 is a block diagram showing the third modification of the arrangement of the antenna apparatus according to the embodiment; and
FIG. 6 is a block diagram showing the fourth modification of the arrangement of the antenna apparatus according to the embodiment.

### DETAILED DESCRIPTION

In general, according to one embodiment, an antenna apparatus includes an antenna, a duplexer, a reception circuit, a phase controller, a combining unit, a thermally insulating container and a cooling unit. An antenna apparatus used in an apparatus which selects a transmission frequency from a plurality of transmittable frequencies, transmits a signal of the selected transmission frequency, selects a frequency coincident with the transmission frequency from the plurality of transmittable frequencies, and receives a signal of the selected frequency. An antenna is used for both transmission and reception. A duplexer configured to switch between a transmitter and a receiver in accordance with switching between transmission and reception, and connect the transmitter and the receiver to the antenna. A reception circuit configured to separate a frequency of a signal received by the antenna into a plurality of reception pathways via BPFs (Band Pass Filters) corresponding to the number of transmittable frequencies, extract the reception signals, amplify with low noise the extracted reception signals by an LNA (Low Noise Filter) for the separated reception pathways, select a reception pathway corresponding to the transmission frequency from the separated reception pathways, and output the reception signal amplified with low noise to the selected reception pathway. A phase controller configured to perform phase control for the reception signal output from the reception circuit. A combining unit configured to combine reception signals having undergone the phase control by the phase controller. A thermally insulating container configured to contain the reception circuit and cut off external heat. A cooling unit configured to cool the reception circuit contained in the thermally insulating container.

A preferred embodiment will now be described with reference to the accompanying drawings.

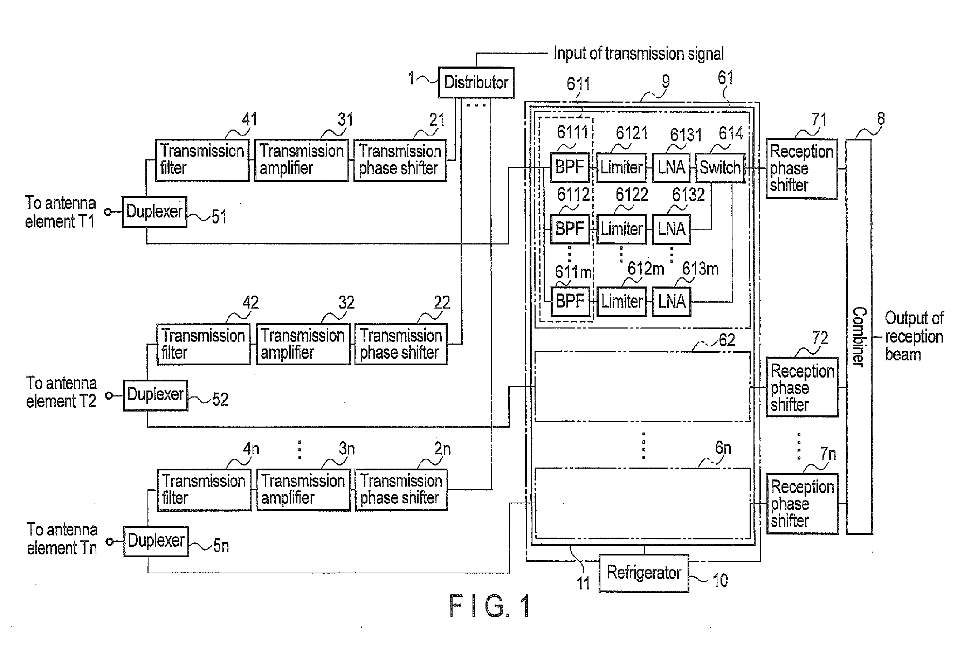

FIG. 1 is a block diagram showing the arrangement of an antenna apparatus according to the embodiment.

The antenna apparatus includes n arrayed antenna elements T1 to Tn, transmitters, receivers, and a cooling apparatus. The transmitter includes a distributor 1, transmission phase shifters 21 to 2n, transmission amplifiers 31 to 3n, and transmission filters 41 to 4n. The receiver includes duplexers 51 to 5n, reception circuits 61 to 6n, reception phase shifters 71 to 7n, and a combiner 8. Each of the reception circuits 61 to 6n includes a demultiplexer 611, limiters 6121 to 612m, LNAs (Low Noise Filters) 6131 to 613m, and a switch 614. The cooling apparatus includes a vacuum container 9, refrigerator 10, and cooling plate 11.

In correspondence with the n antenna elements, n transmitters and n receivers are arranged. The output terminals of the transmitters and the input terminals of the receivers are connected to the corresponding antenna elements T1 to Tn via the duplexers 51 to 5n, respectively.

FIG. 1 shows only the arrangement of the reception circuit 61, and the remaining reception circuits 62 to 6n have the same arrangement as that of the reception circuit 61. In the subsequent drawings showing the embodiment, a repetitive description will be similarly omitted.

The distributor 1 receives a transmission signal generated by a transmission signal generation apparatus (not shown), and distributes the transmission signal into n signals. The transmission signal generation apparatus selects one of center frequencies and generates a transmission signal.

The transmission phase shifters 21 to 2n receive the transmission signals distributed by the distributor 1. The transmission phase shifters 21 to 2n perform desired phase control for the received transmission signals.

The transmission amplifiers 31 to 3n receive the transmission signals output from the transmission phase shifters 21 to 2n on corresponding transmission pathways. The transmission amplifiers 31 to 3n amplify the powers of the received transmission signals by desired gains.

The transmission filters 41 to 4n receive the transmission signals output from the transmission amplifiers 31 to 3n on the corresponding transmission pathways. The transmission filters 41 to 4n extract desired transmission frequency band components from the received transmission signals.

The duplexers 51 to 5n switch between the transmitters and the receivers for the antenna elements T1 to Tn on the corresponding pathways. The duplexers 51 to 5n use, e.g., circulators or coaxial switches.

The demultiplexer 611 separates the frequency of a reception signal into a plurality of reception pathways in accordance with the number of center frequencies mentioned above. In the antenna apparatus according to the embodiment, a plurality of BPFs 6111 to 611m forming the demultiplexer 611 extract signals of frequency components corresponding to the center frequencies. The demultiplexer 611 outputs a desired frequency band component for each reception pathway, and cuts off other frequency band components. The BPFs 6111 to 611m are made of a superconducting material.

The limiters 6121 to 612m receive desired reception signals output from the BPFs 6111 to 611m. The limiters 6121 to 612m limit the signal levels of the received reception signals to perform over-input protection of the subsequent LNAs 6131 to 613m. The limiters 6121 to 612m in the embodiment protect the LNAs 6131 to 613m from large-power signals having frequencies coincident to desired frequencies, such as transmission signals during the transmission period or interfering signals.

The LNAs 6131 to 613m receive the reception signals output from the corresponding BPFs 6111 to 611m. The LNAs 6131 to 613m amplify the received reception signals by low noise.

The switch 614 selects a reception pathway corresponding to the above-described transmission frequency. The switch 614 connects the selected reception pathway to a line extending from the switch 614. The switch 614 selects a reception pathway corresponding to the transmission frequency in accordance with a control signal from a transmission controller (not shown).

The reception phase shifters 71 to 7n receive reception signals output from the reception circuits 61 to 6n. The reception phase shifters 71 to 7n perform desired phase control for the received reception signals.

The combiner 8 receives the reception signals phase-controlled by the reception phase shifters 71 to 7n. The combiner 8 combines the received reception signals.

The vacuum container 9 contains the reception circuits 61 to 6n. The vacuum container 9 maintains its inside in the vacuum state to protect its contents from external heat. The vacuum container 9 is a container for maintaining in the vacuum state the periphery where a superconducting material is arranged, and insulating the superconducting material from heat for the purpose of efficient maintenance of a very low temperature. To achieve this, at least the periphery where the superconducting material is arranged has an airtight structure, including an interface connector and the like.

The refrigerator 10 and cooling plate 11 cool the lines and the reception circuits 61 to 6n in the vacuum container 9 at a very low temperature.

A processing operation in this arrangement will be explained.

First, when a transmission signal having an arbitrary center frequency is input, the distributor 1 distributes and supplies the input transmission signal to the arrayed transmission phase shifters 21 to 2n. The transmission phase shifters 21 to 2n perform phase control corresponding to the excitation distribution of a transmission beam for the distributed transmission signals. The transmission amplifiers 31 to 3n amplify the powers of the phase-controlled transmission signals. The transmission filters 41 to 4n suppress the unwanted wave components of the power-amplified transmission signals. The unwanted wave component-suppressed transmission signals are radiated from the antenna elements T1 to Tn to the atmosphere via the duplexers 51 to 5n. Note that the transmission signal generator (not shown) selects one of center frequencies as the frequency of an input transmission signal.

Signals received by the antenna elements T1 to Tn are input to the reception circuits 61 to 6n via the duplexers 51 to 5n. In the demultiplexer 611 contained in the vacuum container 9, the BPFs 6111 to 611m corresponding to the number of center frequencies separate the frequency of the input reception signal, extracting desired frequency band components. The limiters 6121 to 612m limit the amplitudes of the extracted reception signals. The LNAs 6131 to 613m amplify with low noise the amplitude-limited reception signals. The switch 614 selects a signal for a reception pathway corresponding to the transmission frequency from the reception signals amplified with low noise. The reception phase shifters 71 to 7n perform phase control complying with the directivity of a reception beam for the reception signal selected by the switch 614. The combiner 8 combines phase-controlled reception signals, and outputs the combined signal as a reception beam.

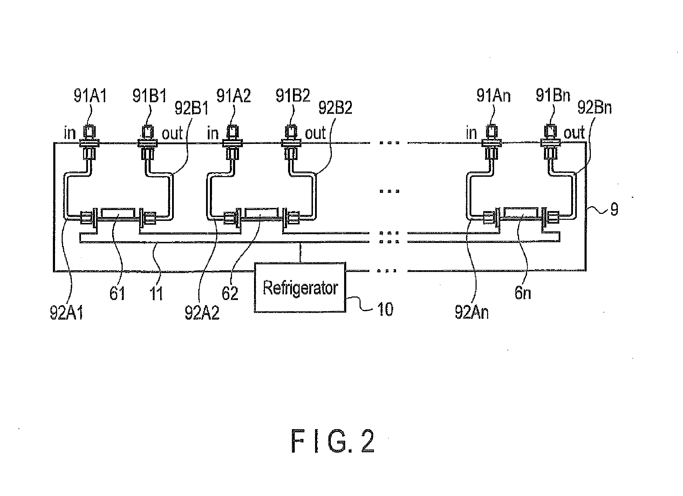

FIG. 2 is a sectional view showing the vacuum container 9 in the antenna apparatus shown in FIG. 1.

In each of the reception circuits 61 to 6n in the vacuum container 9 shown in FIG. 2, the line and the demultiplexer 611 including the BPFs 6111 to 611m are made of a superconducting material.

Next, input/output of a signal in the reception circuits 61 to 6n will be explained.

As shown in FIG. 2, signals received by the antenna elements T1 to Tn are input to the reception circuits 61 to 6n in the vacuum container 9 via input-side coaxial connectors 91A1 to 91An and coaxial cables 92A1 to 92An. The cooling plate 11 in the vacuum container 9 cools the reception circuits 61 to 6n to a very low temperature. As a result, the line and BPFs 6111 to 611m made of the superconducting material change to the superconducting state.

Signals output from the reception circuits 61 to 6n are output to room-temperature portions via output-side coaxial cables 92B1 to 92Bn and coaxial connectors 91B1 to 91Bn.

In the embodiment, the transmission loss approaches zero by changing the line and BPFs 6111 to 611m to the superconducting state. Also, in the embodiment, noise generated in the LNAs 6131 to 613m is reduced by cooling the LNAs 6131 to 613m to a very low temperature.

As shown in FIG. 1, in the antenna apparatus according to the embodiment, the reception circuits 61 to 6n include the demultiplexers 611. Further, the antenna apparatus includes reception pathways on which the BPFs 6111 to 611m forming the demultiplexer 611 perform frequency separation by the necessary number of reception frequencies, and the LNAs 6131 to 613m. For example, in a radar apparatus assigned with a plurality of transmittable frequencies (center frequencies) in advance, when the number of center frequencies is m, the number of reception pathways for which the demultiplexer 611 perform frequency separation is also m in the antenna apparatus. The BPFs 6111 to 611m are narrow-band filters which extract only signals of instantaneous bands to be used and cut off other frequency band components. When an interference by an unwanted wave such as an interfering signal occurs on one or more of the m separated reception pathways, the antenna apparatus can transmit/receive signals on the reception pathways of uninterrupted frequencies. That is, the antenna apparatus can continue the operation.

The BPFs 6111 to 611m forming the demultiplexer 611 serve as superconducting filters by a cooling means such as the refrigerator 10. Thus, the antenna apparatus can quickly suppress frequency components other than those of instantaneous bands which are used, at a very small loss.

The antenna apparatus according to the embodiment uses diodes as the limiters 6121 to 612m. The antenna apparatus controls ON/OFF of the diode by controlling an application voltage to the diode. Hence, the antenna apparatus can limit output power (limiting function) when a large-power signal is input to a selected reception pathway during the reception period, in addition to OFF control during the transmission period and for an unselected reception pathway, similar to switches 6141 to 614m in the second modification to be described later. The antenna apparatus can perform OFF control during the transmission period and for an unselected reception pathway without using the switches 6141 to 614m, and protect the LNAs 6131 to 613m.

In the antenna apparatus shown in FIGS. 1 and 2, the reception circuits 61 to 6n are contained in the vacuum container 9 and integrated, but the antenna apparatus is not limited to this. For example, in the antenna apparatus, the vacuum container 9 may be divided for respective circuits corresponding to the antenna elements T1 to Tn.

In the antenna apparatus shown in FIGS. 1 and 2, one cooling plate 11 cools the plurality of reception circuits 61 to 6n, but the antenna apparatus is not limited to this. In the antenna apparatus, the cooling plates 11 may be arranged for respective circuits corresponding to the antenna elements T1 to Tn to individually cool the reception circuits 61 to 6n. In drawings showing the following modifications, a repetitive description will be similarly omitted.

### (Modifications of Embodiment)

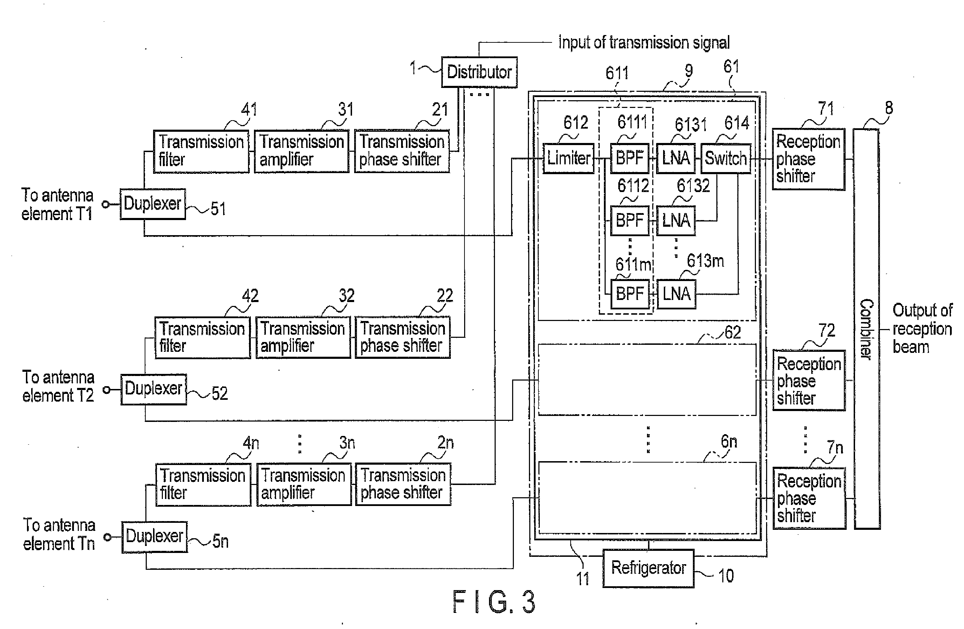

FIG. 3 is a block diagram showing the first modification of the arrangement of the antenna apparatus according to the embodiment.

In the antenna apparatus shown in FIG. 3, a limiter 612 is arranged on the input side of the demultiplexer 611. With this arrangement, the limiter 612 need not be arranged for each reception pathway in the antenna apparatus. The antenna apparatus can greatly reduce the number of limiters 612 to be used and protect the LNAs 6131 to 613m from a large-power signal.

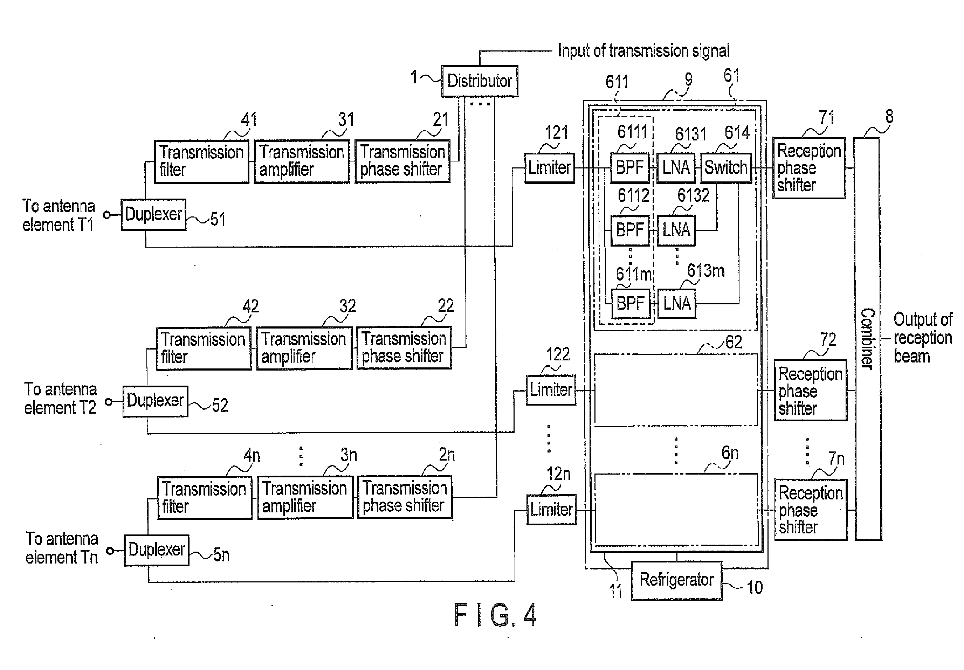

The antenna apparatus shown in FIG. 3 represents an example in which the limiter 612 is arranged in the vacuum container 9, but the antenna apparatus is not limited to this. FIG. 4 is a block diagram showing the second modification of the arrangement of the antenna apparatus according to the embodiment. As shown in FIG. 4, in the antenna apparatus, a limiter 121 may be arranged outside the vacuum container 9, instead of the limiter 612. With this arrangement, the antenna apparatus can protect the LNAs 6131 to 613m from a large-power signal. As for the remaining reception circuits 62 to 6n, limiters 122 to 12n may be arranged outside the vacuum container 9 to protect the LNAs from a large-power signal.

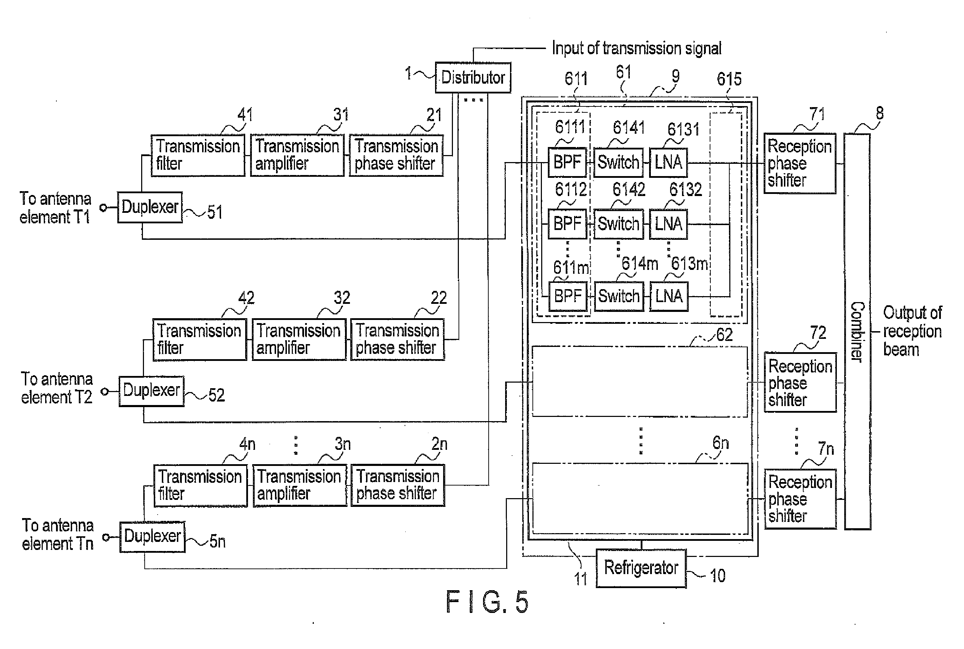

FIG. 5 is a block diagram showing the third modification of the arrangement of the antenna apparatus according to the embodiment.

In the antenna apparatus shown in FIG. 5, the switches 6141 to 614m are interposed between the demultiplexer 611 and the LNAs 6131 to 613m. The antenna apparatus controls the switches 6141 to 614m to extract signals on reception pathways corresponding to transmission frequencies. Output signals from the LNAs 6131 to 613m are output to the reception phase shifter 71 via a multiplexer 615. During the transmission period, large-power signals are input to reception pathways having frequencies coincident to desired frequencies via the duplexers 51 to 5n. The antenna apparatus controls the switches 6141 to 614m to be OFF during the transmission period, thereby protecting the LNAs 6131 to 613m.

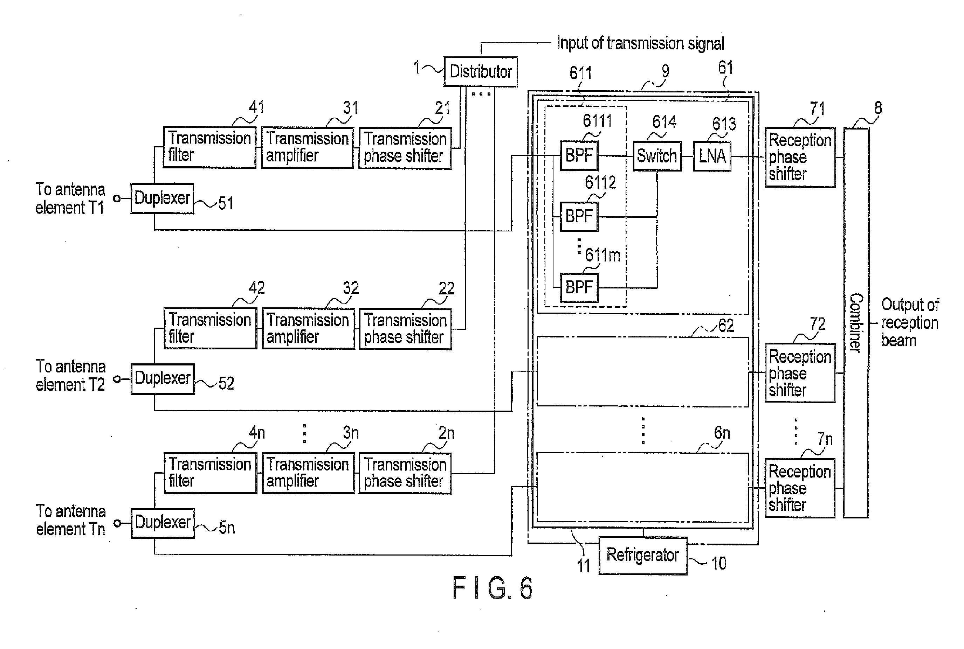

FIG. 6 is a block diagram showing the fourth modification of the arrangement of the antenna apparatus according to the embodiment.

In the antenna apparatus shown in FIG. 6, one switch 614 selects a reception signal to be used. Similar to the second modification described above, the number of LNAs 613 to be used can be decreased while protecting the LNAs 613. The antenna apparatus can further downsize the circuit.

That is, as described in the embodiment and the modifications of the embodiment, the reception circuits 61 to 6n can be implemented in various forms by combining means such as limiters or switches for protecting LNAs from a large-power signal such as a transmission signal or interfering signal, pathway selection by switches for reducing output signals from the vacuum container 9, the combiner 8, and the like.

As described above, the antenna apparatus in the embodiment adopts the demultiplexer 611 including, by a necessary number of frequencies to be separated, the narrow-band BPFs 6111 to 611m which pass only instantaneous bands to be used and cut off other frequency components. When an interference by an unwanted wave such as an interfering signal occurs, the reception pathway can be quickly changed to a reception pathway of another center frequency free from an interference by an unwanted wave. Thus, the antenna apparatus can continue the operation on a reception pathway of a frequency free from an interference by an unwanted wave.

If an interference by an unwanted wave such as an interfering signal occurs, the antenna apparatus according to the embodiment can continue the operation at another frequency free from an interference. The antenna apparatus can prevent superposition of a distortion component generated by an interfering signal or the like on a reception signal. Since the cooling means cools the reception circuits 61 to 6n to a very low temperature, the antenna apparatus can realize a high-sensitivity receiver.

The antenna apparatus is applicable to both a mechanical rotational array antenna using no phase shifter, and a phased array antenna including a phase shift for each antenna element or sub-array.

The embodiment has described the antenna apparatus including the arrayed antenna elements T1 to Tn, but the antenna apparatus is not limited to this. For n = 1 (the number of antenna elements is 1), the antenna apparatus may not include the distributor 1, transmission phase shifters 21 to 2n, reception phase shifters 71 to 7n, and combiner 8.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An antenna apparatus used in an apparatus which selects a transmission frequency from a plurality of transmittable frequencies, transmits a signal of the selected transmission frequency, selects a frequency coincident with the transmission frequency from the plurality of transmittable frequencies, and receives a signal of the selected frequency, **characterized by** comprising:
an antenna (T1) for both transmission and reception;
a duplexer (51) configured to switch between a transmitter and a receiver in accordance with switching between transmission and reception, and connect the transmitter and the receiver to the antenna (T1);
a reception circuit (61) configured to separate a frequency of a signal received by the antenna (T1) into a plurality of reception pathways via BPFs (Band Pass Filters) (6111 to 611m) corresponding to the number of transmittable frequencies, extract the reception signals, amplify with low noise the extracted reception signals by an LNA (Low Noise Filter) (6131 to 613m) for the separated reception pathways, select a reception pathway corresponding to the transmission frequency from the separated reception pathways, and output the reception signal amplified with low noise to the selected reception pathway;
a phase controller (71) configured to perform phase control for the reception signal output from the reception circuit (61);
a combining unit (8) configured to combine reception signals having undergone the phase control by the phase controller (71);
a thermally insulating container (9) configured to contain the reception circuit and cut off external heat; and
a cooling unit (10 and 11) configured to cool the reception circuit (61) contained in the thermally insulating container (9).

2. The apparatus according to claim 1, **characterized in that** the reception circuit (61) includes
a plurality of BPFs (6111 to 611m) configured to be arranged for the respective reception pathways to be separated, extract, from the reception signal, signals of frequency bands corresponding to the respective transmittable frequencies, and cut off signals of other frequency bands,
a plurality of limiters (6121 to 612m) configured to limit signal levels of output signals of the plurality of BPFs (6111 to 611m),
a plurality of LNAs (6131 to 613m) configured to amplify with low noise output signals of the plurality of limiters (6121 to 612m), and
a switcher (614) configured to select a reception pathway corresponding to the transmission frequency among the output signals of the plurality of BPFs (6121 to 612m), and output a signal of the selected reception pathway to the phase controller (71).

3. The apparatus according to claim 1, **characterized in that** the reception circuit (61) includes
a limiter (612) configured to limit a signal level of a reception signal of the antenna or an antenna element,
a plurality of BPFs (6111 to 611m) configured to separate a frequency of an output signal of the limiter (612) into a plurality of reception pathways corresponding to the number of transmittable frequencies,
a plurality of LNAs (6131 to 613m) configured to amplify with low noise output signals of the plurality of BPFs (6111 to 611m), and
a switcher (614) configured to select a reception pathway corresponding to the transmission frequency among the output signals of the plurality of LNAs (6131 to 613m), and output a signal of the selected reception pathway to the phase controller (71).

4. The apparatus according to claim 3, **characterized in that** the limiter (121 to 12n) is arranged outside the thermally insulating container (9).

5. The apparatus according to claim 1, **characterized in that** the reception circuit (61) includes
a plurality of BPFs (6111 to 611m) configured to be arranged for the respective reception pathways to be separated, extract, from the reception signal, signals of frequency bands corresponding to the respective transmittable frequencies, and cut off signals of other frequency bands,
a plurality of limiters (6141 to 614m) configured to enable a reception pathway corresponding to the transmission frequency among output signals of the plurality of BPFs (6111 to 611m), limit a level of output signals corresponding to the reception pathway, and disable other reception pathways,
a plurality of LNAs (6131 to 613m) configured to receive output signals of the plurality of BPFs via a plurality of switches, and amplify the received signals with low noise, and
a multiplexer (615) configured to multiplex the plurality of received signals amplified by the plurality of LNAs (6131 to 613m) by low noise, and output the multiplexed signal to the phase controller (71).

6. The apparatus according to claim 1, **characterized in that** the reception circuit (61) includes
a plurality of BPFs (6111 to 611m) configured to be arranged for the respective reception pathways to be separated, extract, from the reception signal, signals of frequency bands corresponding to the respective transmittable frequencies, and cut off signals of other frequency bands,
a limiter (614) configured to select a reception pathway corresponding to the transmission frequency among the output signals of the plurality of BPFs, and limit a signal level of the selected reception pathway, and
an LNA (613) configured to amplify with low noise a signal of the reception pathway selected by the limiter, and output the amplified signal to the phase controller.

7. The apparatus according to claim 1, **characterized in that**
at least part of the reception circuit (61) uses a superconducting material, and
the thermally insulating container (9) maintains, in a vacuum state, at least a periphery where the superconducting material of the reception circuit (61) is arranged.

8. An antenna apparatus used in an apparatus which selects a transmission frequency from a plurality of transmittable frequencies, transmits a signal of the selected transmission frequency, selects a frequency coincident with the transmission frequency from the plurality of transmittable frequencies, and receives a signal of the selected frequency, **characterized by** comprising:
an array antenna (T1 to Tn) for both transmission and reception including a plurality of arrayed antenna elements;
a plurality of duplexers (51 to 5n) configured to switch between a transmitter and a receiver in accordance with switching between transmission and reception, and connect the transmitter and the receiver to the array antenna (T1 to Tn);
a plurality of reception circuits (61 to 6n) configured to be arranged in correspondence with the respective antenna elements of the array antenna (T1 to Tn), separate frequencies of signals received by the antenna elements into a plurality of reception pathways via BPFs (6111 to 611m) corresponding to the number of transmittable frequencies, extract the reception signals, amplify the extracted reception signals by low noise by LNAs (Low Noise Filters) (6131 to 613m) for the separated reception pathways, select a reception pathway corresponding to the transmission frequency from the separated reception pathways, and output the signals amplified with low noise to the selected reception pathway;
a plurality of phase controllers (71 to 7n) configured to perform phase control for the reception signals output from the reception circuits (61 to 6n);
a combining unit (8) configured to combine the reception signals having undergone the phase control by the plurality of phase controllers (71 to 7n);
a thermally insulating container (9) configured to contain the reception circuits and cut off external heat; and
a cooling unit (10 and 11) configured to cool the reception circuits contained in the thermally insulating container (9).

9. The apparatus according to claim 8, **characterized in that** the reception circuit includes
a plurality of BPFs (6111 to 611m) configured to be arranged for the respective reception pathways to be separated, extract, from the reception signal, signals of frequency bands corresponding to the respective transmittable frequencies, and cut off signals of other frequency bands,
a plurality of limiters (6121 to 612m) configured to limit signal levels of output signals of the plurality of BPFs (6111 to 611m),
a plurality of LNAs (6131 to 613m) configured to amplify with low noise output signals of the plurality of limiters (6121 to 612m), and
a switcher (614) configured to select a reception pathway corresponding to the transmission frequency among the output signals of the plurality of LNAs (6131 to 613m), and output a signal of the selected reception pathway to the phase controller (71).

10. The apparatus according to claim 8, **characterized in that** the reception circuit (61 to 6n) includes
a limiter (612) configured to limit a signal level of a reception signal of the antenna or the antenna element,
a plurality of BPFs (6111 to 611m) configured to separate a frequency of an output signal of the limiter (612) into a plurality of reception pathways corresponding to the number of transmittable frequencies,
a plurality of LNAs (6131 to 613m) configured to amplify with low noise output signals of the plurality of BPFs (6111 to 611m), and
a switcher (614) configured to select a reception pathway corresponding to the transmission frequency among the output signals of the plurality of LNAs (6131 to 613m), and output a signal of the selected reception pathway to the phase controller (71).

11. The apparatus according to claim 10, **characterized in that** the limiter (121 to 12n) is arranged outside the thermally insulating container (6).

12. The apparatus according to claim 8, **characterized in that** the reception circuit (61 to 6n) includes
a plurality of BPFs (6111 to 611m) configured to be arranged for the respective reception pathways to be separated, extract, from the reception signal, signals of frequency bands corresponding to the respective transmittable frequencies, and cut off signals of other frequency bands,
a plurality of limiters (6121 to 612m) configured to enable a reception pathway corresponding to the transmission frequency among output signals of the plurality of BPFs (6111 to 611m), limit a level of an output signal corresponding to the reception pathway, and disable other reception pathways,
a plurality of LNAs (6131 to 613m) configured to receive output signals of the plurality of BPFs (6111 to 611m) via a plurality of switches, and amplify the received signals with low noise, and
a multiplexer (615) configured to multiplex the plurality of received signals amplified by the plurality of LNAs (6131 to 613m) by low noise, and output the multiplexed signal to the phase controller (71).

13. The apparatus according to claim 8, **characterized in that** the reception circuit (61 to 6n) includes
a plurality of BPFs (6111 to 611m) configured to be arranged for the respective reception pathways to be separated, extract, from the reception signal, signals of frequency bands corresponding to the respective transmittable frequencies, and cut off signals of other frequency bands,
a limiter (612) configured to select a reception pathway corresponding to the transmission frequency among the output signals of the plurality of BPFs (6111 to 611m), and limit a signal level of the selected reception pathway, and
an LNA (613) configured to amplify with low noise a signal of the reception pathway selected by the limiter (612), and output the amplified signal to the phase controller (71).

14. The apparatus according to claim 8, **characterized in that**
at least part of the reception circuit (61) uses a superconducting material, and
the thermally insulating container (9) maintains, in a vacuum state, at least a periphery where the superconducting material of the reception circuit (61) is arranged.

15. The apparatus according to claim 8, **characterized in that** the thermally insulating container (9) is divided for respective reception pathways corresponding to the respective antenna elements.
